# EUROPEAN PATENT SPECIFICATION

(11) **EP 3 889 549 B1**
(45) Date of publication and mention of the grant of the patent: **02.08.2023**
(21) Application number: 19889714.2
(22) Date of filing: 29.11.2019
(51) Int. Cl.: G01D 5/353

(54) **OPTICAL FIBER SENSING EXPANSION DEVICE AND OPTICAL FIBER SENSING SYSTEM**
GLASFASERMESSENDES EXPANSIONSSYSTEM UND GLASFASERMESSSYSTEM
DISPOSITIF D'EXPANSION DE DÉTECTION À FIBRE OPTIQUE ET SYSTÈME DE DÉTECTION À FIBRE OPTIQUE

(30) Priority: 30.11.2018 JP 2018225989
(43) Date of publication of application: 06.10.2021
(73) Proprietor: NEC Corporation, 108-8001 Tokyo (JP)
(72) Inventor: YODA, Yukihide, Tokyo 108-8001 (JP); AONO, Yoshiaki, Tokyo 108-8001 (JP)
(74) Representative: Vossius & Partner Patentanwälte Rechtsanwälte mbB
(86) International application number: PCT/JP2019/046875
(87) International publication number: WO 2020/111260

(56) References cited:
- JP-A- H08 278 433
- JP-A- H09 270 090
- JP-A- H09 270 090
- JP-A- S61 111 100
- JP-A- 2002 310 729
- JP-A- 2004 109 004
- JP-A- 2005 184 772
- JP-A- 2005 184 772
- JP-A- 2007 121 008
- JP-A- 2012 184 947
- US-A- 5 118 931
- US-A1- 2012 017 687

## Description

### Technical Field

The present disclosure relates to an optical fiber sensing expansion apparatus and an optical fiber sensing system.

### Background Art

There is a technology called optical fiber sensing that uses an optical fiber as a sensor. Optical fiber sensing is used to detect the state, etc. of a monitoring obj ect.

Here, when the monitoring object is a piece of infrastructure such as a road, a railroad track, a utility pole, a tunnel, or a bridge, there may be a case in which an existing optical fiber (for example, an existing communication optical fiber) is laid in the monitoring object. In such a case, by utilizing the existing optical fiber as a sensor, it is possible to detect the state, etc. of the monitoring object.

However, in recent years, in optical fiber sensing systems, the monitoring objects have become diverse, and the existing optical fiber is not always laid near the monitoring object.

In addition, when realizing an advanced optical fiber sensing system, sensing with enhanced sensitivity is required, but the detection sensitivity may be insufficient with an existing optical fiber arrangement.

Therefore, recently, it has been required to expand the optical fiber sensing systems so as to enable addition of monitoring objects and improvement of the detection sensitivity to be realized.

As a technique for expanding an optical fiber sensing system, for example, Patent Literature 1 can be mentioned. In the technique described in Patent Literature 1, an optical fiber is installed in a monitoring region, and light propagated through the optical fiber is received by a photodiode. Then, a determination detection unit, which is connected to the photodiode via an electric cable, detects the vibration or displacement applied to the optical fiber based on the frequency and amplitude of the electric signal detected by the photodiode.

### Citation List

### Patent Literature

Patent Literature 1: Japanese Unexamined Patent Application Publication No. 2008-309497

JP 2005184772A relates to a person detecting system. The person detecting sensor in which optical fiber is fixed on a sheet surface is arranged in the monitoring area.

JP 2004109004A relates to an optical fiber monitoring system. Optical fiber monitoring devices whose monitoring capacity are several kms or less are distributed, and it shares burden of monitoring a plurality of optical fibers to be monitored.

JP 2012184947A relates to a water gage system. Light beams from an ASE light source are emitted in a predetermined direction by an optical circulator.

JP 409270090A relates to a detecting method. The detecting method detects distributed information from the light signals transmitted by light fiber.

US 20120017687A1 relates to a remote sensing method. A plurality of sensors output information into a DAS system via acousto-mechanical signals.

### Summary of Invention

The present disclosure is defined by independent claim 1.

Dependent claims refer to preferred embodiments.

### Technical Problem

However, in the technique described in Patent Literature 1, it is necessary to newly lay an optical fiber independently of an existing optical fiber. Therefore, a problem exists in that it is not possible to effectively utilize the existing optical fiber and the cost of newly installing the optical fiber becomes expensive.

Accordingly, it is an object of the present disclosure to provide an optical fiber sensing expansion apparatus and an optical fiber sensing system, which can solve the above-described problem, thereby effectively utilizing an existing optical fiber and expanding the optical fiber sensing system inexpensively and easily.

### Solution to Problem

An optical fiber sensing expansion apparatus according to one aspect includes the technical features as defined by independent claim 1.

An optical fiber sensing system according to one aspect includes the technical features as defined by dependent claim 9.

### Advantageous Effects of Invention

According to the above-described aspects, it is possible to achieve an effect that the optical fiber sensing system can be expanded inexpensively and easily by effectively utilizing the existing optical fiber.

### Brief Description of the Drawings

[Fig. 1] Fig. 1 shows an example of a basic configuration of an optical fiber sensing system according to an example embodiment.
[Fig. 2] Fig. 2 shows an example of a monitoring point of a monitoring object in which a sensor unit according to an example embodiment is installed.
[Fig. 3] Fig. 3 shows an example of a unique pattern corresponding to the monitoring object.
[Fig. 4] Fig. 4 shows another example of a unique pattern corresponding to the monitoring object.
[Fig. 5] Fig. 5 shows an example of a connection method by which an optical fiber connection unit according to an example embodiment connects a sensing optical fiber to an optical fiber.
[Fig. 6] Fig. 6 shows another example of the connection method by which the optical fiber connection unit according to an example embodiment connects the sensing optical fiber to an optical fiber.
[Fig. 7] Fig. 7 shows an example of a path through which the fiber connection unit according to an example embodiment transmits a detection result of a parameter in a monitoring object.
[Fig. 8] Fig. 8 shows another example of the path through which the fiber connection unit according to an example embodiment transmits a detection result of a parameter in a monitoring object.
[Fig. 9] Fig. 9 shows an example of the configuration which is a variant of the optical fiber sensing system according to an example embodiment.
[Fig. 10] Fig. 10 shows another example of the configuration which is a variant of the optical fiber sensing system according to an example embodiment.
[Fig. 11] Fig. 11 shows a further example of the configuration of a fiber connection unit according to an example embodiment.
[Fig. 12] Fig. 12 shows an example of the arrangement pattern of a sensing optical fiber in the sensor unit according to an example embodiment.
[Fig. 13] Fig. 13 shows another example of the arrangement pattern of a sensing optical fiber in the sensor unit according to an example embodiment.
[Fig. 14] Fig. 14 shows a further example of the arrangement pattern of a sensing optical fiber in the sensor unit according to an example embodiment.
[Fig. 15] Fig. 15 shows an example of a three-dimensional arrangement of the sensing optical fiber in the sensor unit according to an example embodiment.
[Fig. 16] Fig. 16 shows an example of the state in which a cushioning material is interposed between the sensing optical fiber according to an example embodiment and a monitoring object.
[Fig. 17] Fig. 17 shows an example of the configuration in which an optical fiber has a branch configuration in the optical fiber sensing system according to the present example embodiment.
[Fig. 18] Fig. 18 shows the configuration of the present invention, in which an optical fiber has a branch configuration in the optical fiber sensing system.
[Fig. 19] Fig. 19 is a flow diagram showing an example of the operational flow of the optical fiber sensing system according to the present example embodiment.
[Fig. 20] Fig. 20 shows an example of the configuration of the fiber connection unit according to another example embodiment.
[Fig. 21] Fig. 21 shows another example of the configuration of the fiber connection unit according to another example embodiment.
[Fig. 22] Fig. 22 shows an example of the basic configuration of the optical fiber sensing system according to another example embodiment.

### Description of Embodiments

Hereinafter, example embodiments, which are to be construed as examples not belonging to the invention unless explicitly specified otherwise, will be described with reference to the drawings.

### <Example embodiment>

### <Basic configuration of example embodiment>

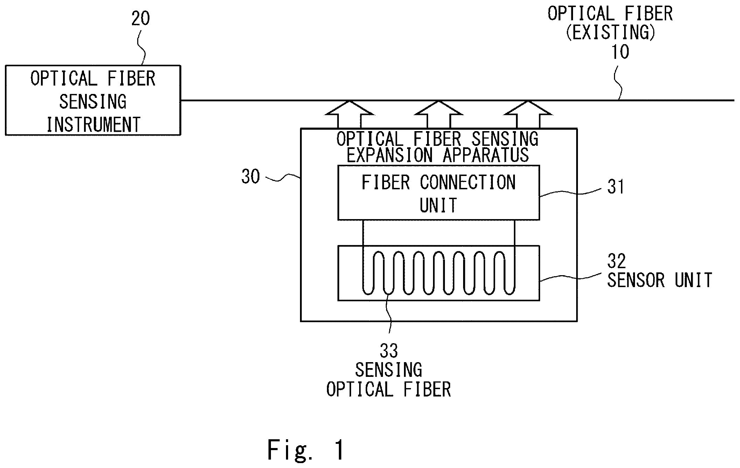

First, a basic configuration of the optical fiber sensing system according to the present example embodiment will be described with reference to Fig. 1.

As shown in Fig. 1, the optical fiber sensing system according to the present example embodiment includes an optical fiber 10, an optical fiber sensing instrument 20, and an optical fiber sensing expansion apparatus 30. Note that the optical fiber sensing instrument 20 is an example of a detection unit.

The optical fiber 10 is an existing optical fiber extending from the optical fiber sensing instrument 20 and laid in a piece of infrastructure such as a road, a railroad track, a utility pole, a tunnel, and a bridge. The optical fiber 10 may be a communication optical fiber, or a sensing optical fiber laid in advance for monitoring the above-described infrastructure. Further, in general, the communication optical fiber is laid in an aspect of an optical fiber cable which is formed by covering a plurality of communication optical fibers. At this time, if there is an unused communication optical fiber among the plurality of communication optical fibers, the unused communication optical fiber may be used as the optical fiber 10.

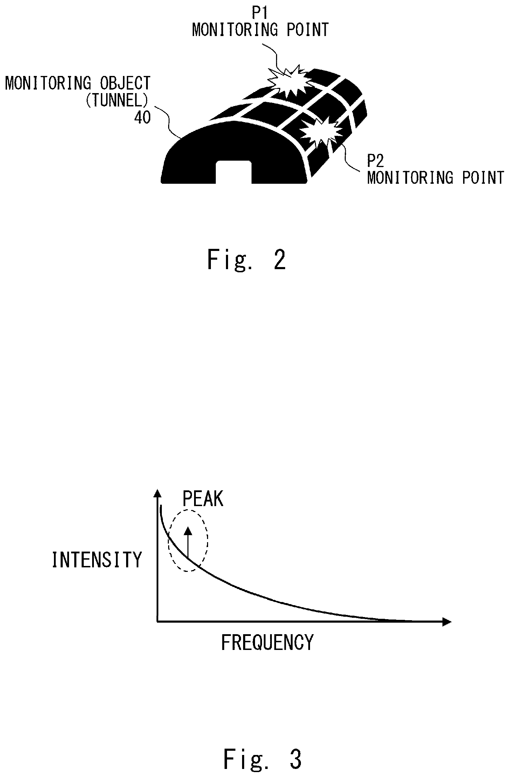

The optical fiber sensing expansion apparatus 30 includes a sensor unit 32 in which the sensing optical fiber 33 is stored, and a fiber connection unit 31 capable of connecting the sensing optical fiber 33 to the optical fiber 10. While the optical fiber sensing expansion apparatus 30 also includes a fixing unit for fixing the sensor unit 32 to the monitoring object 40 (see Fig. 2, etc.), details of the fixing unit will be described later.

In the optical fiber sensing system according to the present example embodiment, when expansions such as adding a monitoring object 40 and improving the detection sensitivity are performed, the sensor unit 32 is installed to the monitoring object 40 to be added, the monitoring object 40 for which the detection sensitivity is improved, or the like. The monitoring object 40 is, for example, a piece of infrastructure such as a road, a railroad track, a utility pole, a tunnel, a bridge, and the surroundings of the infrastructure. The sensor unit 32 is fixed to the monitoring object 40 itself, or is buried and fixed in the ground near the monitoring object 40. Further, since the monitoring object 40 has different vibrations and the like at each position, the sensor unit 32 may be installed at a plurality of monitoring points for one monitoring object 40. Fig. 2 shows an example in which the sensor unit 32 is installed at two monitoring points P1 and P2 of a tunnel when the monitoring object 40 is a tunnel. Further, the sensor unit 32 may be installed in the monitoring object 40 by accommodating the optical fiber sensing expansion apparatus 30 in a housing and installing the housing itself in the monitoring object 40.

As described above, the sensor unit 32 stores the sensing optical fiber 33. The method of storing the sensing optical fiber 33 is not particularly limited.

For example, the sensor unit 32 may be used as a housing, and the sensing optical fiber 33 may be accommodated inside the housing, or the sensor unit 32 may be composed of a member having a predetermined shape (for example, a rectangular parallelepiped shape) and the sensing optical fiber 33 may be bonded to the outer surface of the member with a tape or the like. Further, the length of the sensing optical fiber 33 may be a length corresponding to the monitoring object 40 in which the sensor unit 32 is installed. For example, while it is conceivable to make the length of the sensing optical fiber 33 about 1 m if the monitoring object 40 is a utility pole, and about 10 m if the monitoring object 40 is a tunnel, this is not limiting. Then, the sensor unit 32 detects, by means of the sensing optical fiber 33, various parameters such as vibration, sound, temperature, and stress generated in the monitoring object 40 in which the sensor unit 32 is installed.

As described above, the fiber connection unit 31 has a configuration in which the sensing optical fiber 33 can be connected to the optical fiber 10. Note that the fiber connection unit 31 is configured so as to be able to connect the sensing optical fiber 33 not only to the existing optical fiber such as the optical fiber 10 but also to a newly installed optical fiber. Then, the fiber connection unit 31 superimposes the detection result of a parameter in the monitoring object 40, which is detected by the sensor unit 32, on the optical signal to be transmitted by the optical fiber 10.

The optical fiber sensing instrument 20 makes an optical signal incident into the optical fiber 10 and receives an optical signal from the optical fiber 10. For example, the optical signal made incident into the optical fiber 10 is a pulsed light which serves as a detection optical signal, and the optical signal received from the optical fiber 10 is scattered light generated for each transmission distance as this pulsed light is transmitted through the optical fiber 10.

Here, as described above, on the optical signal received by the optical fiber sensing instrument 20, the detection results of parameters (vibration, sound, temperature, stress, etc.) in the monitoring object 40, which are detected by the sensor unit 32, are superimposed. At this time, the pattern of each parameter in the monitoring object 40 is a fluctuation pattern which fluctuates dynamically, and differs depending on the state, structure, material, and the like of the monitoring object 40. For example, when the parameter is vibration, it is possible to define a dynamic unique pattern of vibration generated in the monitoring object 40 by detecting transitions of the intensity of vibration, the vibration position, the fluctuation of vibration frequency, and the like.

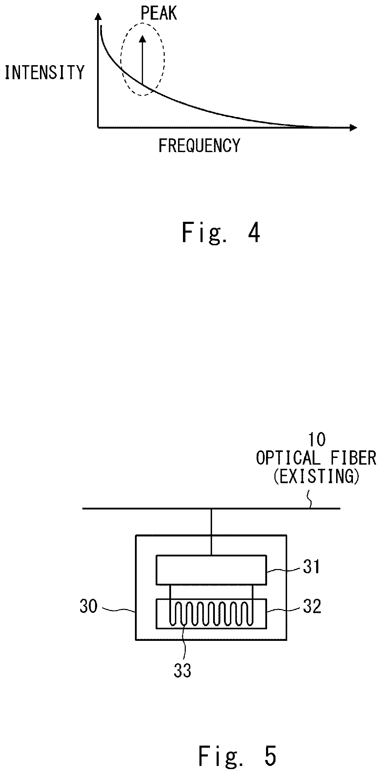

Therefore, the optical fiber sensing instrument 20 detects a dynamic unique pattern of vibration in the monitoring object 40 by using a distributed vibration sensor based on, for example, the detection result of vibration in the monitoring object 40. Figs. 3 and 4 are examples of dynamic unique patterns of vibration when the monitoring object 40 is a structure such as a tunnel, showing the frequency characteristics (the horizontal axis is frequency and the vertical axis is intensity (amplitude)) after performing FFT (Fast Fourier Transform) on the vibration data of the structure (the horizontal axis is time and the vertical axis is intensity (amplitude)). As shown in Figs. 3 and 4, an intensity peak occurs in the frequency characteristics of the structure, and the frequency at which this peak occurs differs depending on the deteriorated state of the structure. Therefore, it becomes possible to determine the deteriorated state of the structure by the optical fiber sensing instrument 20 detecting the dynamic unique pattern of vibration of the structure.

Further, the optical fiber sensing instrument 20 may detect a complex unique pattern of the monitoring object 40 by concurrently detecting a dynamic unique pattern of sound and temperature, etc. in the monitoring object 40 by using a distributed acoustic sensor, a distributed temperature sensor, or the like. This makes it possible to determine the state, structure, material, etc. of the monitoring object 40 with higher accuracy.

Further, the optical fiber sensing instrument 20 can identify the position where the unique pattern has occurred, for example, based on the time difference between the time when the pulsed light is made incident into the optical fiber 10 and the time when the scattered light is received from the optical fiber 10. Thereby, the optical fiber sensing instrument 20 can also identify the position of the monitoring object 40.

As described above, the optical fiber sensing expansion apparatus 30 according to the present example embodiment includes: a fiber connection unit 31 which can connect the sensor unit 32 in which the sensing optical fiber 33 is stored, and the sensing optical fiber 33 to the optical fiber 10, and superimpose the detection result detected by the sensor unit 32 on an optical signal transmitted by the optical fiber 10; and a fixing unit or the like that fixes the sensor unit 32 to the monitoring object 40.

Therefore, it becomes possible to perform expansions such as addition of a monitoring object 40 and improvement of the detection sensitivity only by fixing the sensor unit 32 to a monitoring object 40 to be added and a monitoring object 40 for which detection accuracy is desired to be improved, and connecting the sensing optical fiber 33 to the existing optical fiber 10 by the fiber connection unit 31. Therefore, it is possible to expand the optical fiber sensing system inexpensively and easily by effectively utilizing the existing optical fiber 10.

Hereinafter, the optical fiber sensing system according to the present example embodiment will be described in more detail.

### <Method of connecting sensing optical fiber 33 with optical fiber 10>

First, a connection method for connecting the sensing optical fiber 33 to the optical fiber 10 in the fiber connection unit 31 will be described.

### (A1) Optical connection

The fiber connection unit 31 may optically connect the sensing optical fiber 33 to the optical fiber 10.

For example, as shown in Fig. 5, the fiber connection unit 31 may directly connect the element wire of the sensing optical fiber 33 to the element wire of the optical fiber 10. Splice or the like may be used for the connection in this case.

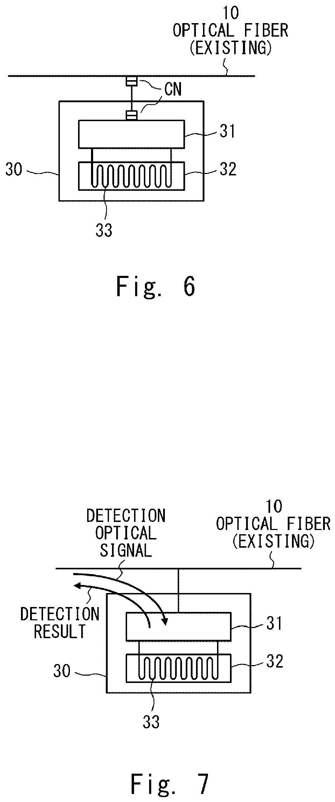

Alternatively, as shown in Fig. 6, the fiber connection unit 31 may connect the element wire of the sensing optical fiber 33 to the element wire of the optical fiber 10 by using a connector CN. Note that, in Fig. 6, the connector CN is arranged on the optical fiber 10 side and the optical fiber sensing expansion apparatus 30 side, but the arrangement of the connector CN is not limited to this. For example, the connector CN may be arranged only on the optical fiber 10 side, may be arranged only on the optical fiber sensing expansion apparatus 30 side, or may be arranged only between the optical fiber 10 and the optical fiber sensing expansion apparatus 30.

Here, when the fiber connection unit 31 optically connects the sensing optical fiber 33 to the optical fiber 10, a detection optical signal (pulsed light) which is made incident into the optical fiber 10 by the optical fiber sensing instrument 20 is received at the fiber connection unit 31. Specifically, on the optical fiber 10, an optical coupler or an optical splitter (not shown) is provided in the front stage of the connected portion with the fiber connection unit 31, and the detection optical signal demultiplexed by the optical coupler or the optical splitter is received. Therefore, in the sensing optical fiber 33 stored in the sensor unit 32, scattered light with respect to the detection optical signal is generated. This scattered light fluctuates according to the vibration, sound, temperature, stress, etc. generated in the monitoring object 40 in which the sensor unit 32 is installed. Therefore, the sensor unit 32 detects various parameters such as vibration, sound, temperature, and stress in the monitoring object 40 by detecting the scattered light.

At this time, several paths can be considered as the path through which the fiber connection unit 31 transmits the detection result of the parameter in the monitoring object 40, which is detected by the sensor unit 32.

For example, as shown in Fig. 7, the fiber connection unit 31 may transmit the detection result in the direction opposite to the transmission direction of the detection optical signal (that is, in the direction to the optical fiber sensing instrument 20).

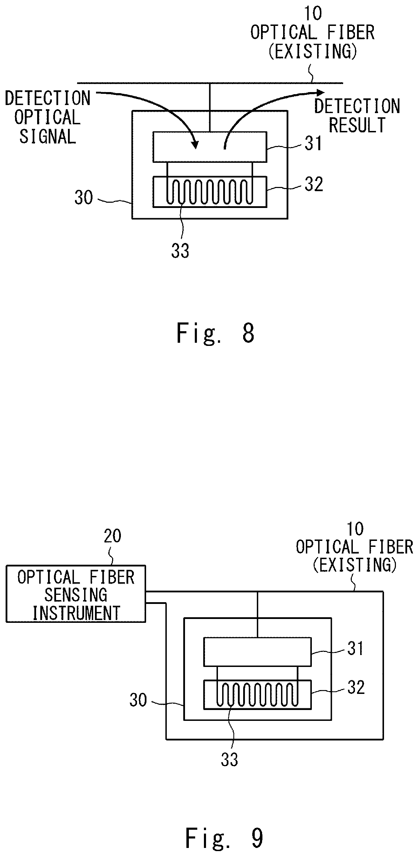

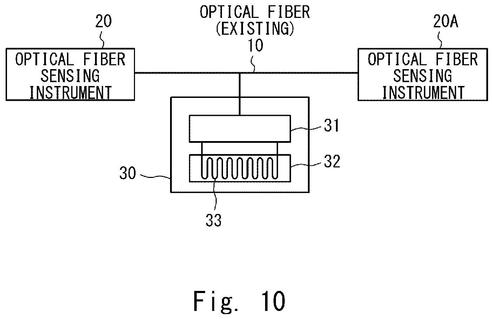

Alternatively, as shown in Fig. 8, the fiber connection unit 31 may transmit the detection result in the same direction as the transmission direction of the detection optical signal (that is, in the direction opposite to the direction to the optical fiber sensing instrument 20). However, in the case of Fig. 8, the optical fiber sensing instrument 20 cannot receive the detection result in this state. Therefore, for example, as shown in Fig. 9, the optical fiber 10 may be formed into a loop such that both ends of the optical fiber 10 may be connected to the optical fiber sensing instrument 20. Alternatively, as shown in Fig. 10, one end of the optical fiber 10 may be connected to the optical fiber sensing instrument 20 and the other end may be connected to another optical fiber sensing instrument 20A. In the case of Fig. 10, the optical fiber sensing instrument 20 makes a detection optical signal incident into the optical fiber 10, and the optical fiber sensing instrument 20A receives the detection result from the optical fiber 10, and detects a unique pattern of the monitoring object 40 based on the detection result.

### (A2) Connection other than optical connection

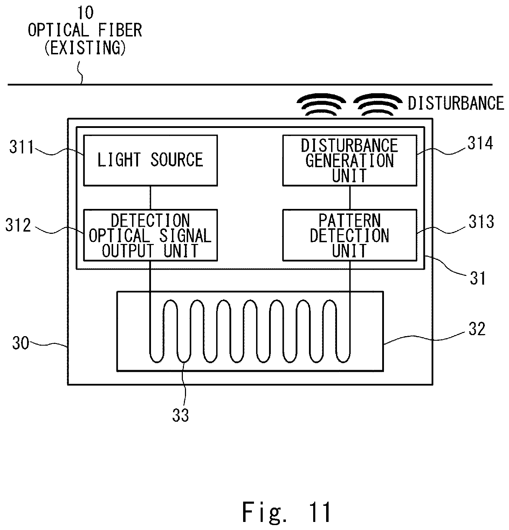

The fiber connection unit 31 may connect the sensing optical fiber 33 to the optical fiber 10 by a method other than the optical connection. Here, it is supposed that the fiber connection unit 31 detects a unique pattern of the monitoring object 40 based on the detection result of the parameter in the monitoring object 40, which is detected by the sensor unit 32, and superimposes the detected unique pattern on the optical signal transmitted by the optical fiber 10. Hereinafter, the configuration of the fiber connection unit 31 in this case will be described with reference to Fig. 11.

The fiber connection unit 31 shown in Fig. 11 includes a light source 311, a detection optical signal output unit 312, a pattern detection unit 313, and a disturbance generation unit 314.

In the case of the configuration of Fig. 11, since the fiber connection unit 31 does not optically connect the sensing optical fiber 33 to the optical fiber 10, the detection optical signal (pulsed light) which is made incident into the optical fiber 10 by the optical fiber sensing instrument 20 will not be received. Therefore, the light source 311 is provided to generate a detection optical signal to be made incident into the sensing optical fiber 33.

The detection optical signal output unit 312 generates a detection optical signal from the output of the light source 311 and makes the generated detection optical signal incident into the sensing optical fiber 33 stored in the sensor unit 32.

The pattern detection unit 313 detects a dynamic unique pattern corresponding to the state, structure, material, etc. of the monitoring object 40 based on the detection result of the parameter in the monitoring object 40, which is detected by the sensor unit 32, and controls the disturbance generation unit 314 based on the detected pattern. Note that the method for detecting a unique pattern may be the same as that in the optical fiber sensing instrument 20 described above.

Under the control of the pattern detection unit 313, the disturbance generation unit 314 superimposes the unique pattern of the monitoring object 40, which is detected by the pattern detection unit 313, on the optical signal transmitted by the optical fiber 10. Specifically, the disturbance generation unit 314 provides the optical fiber 10 with a disturbance corresponding to the unique pattern of the monitoring object 40, thereby superimposing the unique pattern of the monitoring object 40 on the optical signal transmitted through the optical fiber 10. The disturbance provided to the optical fiber 10 is, for example, vibration, sound, heat, or the like. The disturbance generation unit 314 is, for example, a vibration source that provides the optical fiber 10 with vibration corresponding to a vibration pattern generated in the monitoring object 40, a sound source (for example, a speaker, a hammer, etc.) that provides the optical fiber 10 with a sound corresponding to an acoustic pattern generated in the monitoring object 40, and a heat source that provides the optical fiber 10 with a temperature change corresponding to a temperature pattern generated in the monitoring object 40, and the like. Further, the disturbance generation unit 314 may provide the optical fiber 10 with a disturbance corresponding to the unique pattern of the monitoring object 40, that is, a disturbance corresponding to the state, etc. of the monitoring object 40. Therefore, the disturbance generation unit 314 may provide the optical fiber 10 with a disturbance by using a source different from the source that is used to detect the state, etc. of the monitoring object 40. For example, when the state, etc. of the monitoring object 40 is detected by vibration, the disturbance corresponding to the unique pattern of sound or temperature generated in the monitoring object 40 while in that state, etc. may be provided to the optical fiber 10 by using a sound source or a heat source.

<Method of installing sensor unit 32>

Subsequently, an installation method for installing the sensor unit 32 in the monitoring object 40 will be described.

### (B1) Method by use of a housing

The sensor unit 32 may be accommodated in a housing together with the fiber connection unit 31, and the housing itself may be fixed to the monitoring object 40. At this time, as the fixing method for fixing the housing to the monitoring object 40, a method of such as placing the housing on the monitoring object 40 or bonding the housing to the monitoring object 40 with a tape, etc. may be used. When the monitoring object 40 is a structure, the fixing method may be such as driving the housing into the monitoring object 40 with a bolt, etc., winding the housing around the monitoring object 40 with a string, etc., and fixing the housing to the monitoring object 40 by using a fixing jig.

### (B2) Method without using a housing

The sensing optical fiber 33 stored in the sensor unit 32 may be fixed to the monitoring object 40 with a tape. At this time, the sensing optical fiber 33 and the tape may be integrated in advance. Further, a sheet (for example, a resin sheet) having a built-in sensing optical fiber 33 stored in the sensor unit 32 may be fixed to the monitoring object 40. Further, in the case of this method (B2), the fiber connection unit 31 may be accommodated in a housing, and the housing may be fixed to the monitoring object 40 by the method (B1) described above.

That is, the above-described fixing portion (the fixing portion for fixing the sensor unit 32 to the monitoring object 40) will be, in the method (B1) described above, for example a tape, a bolt, a string, or a fixing jig, etc. for fixing the housing for accommodating the sensor unit 32 to the monitoring object 40. Further, in the above-described method (B2), the above-described fixing portion will be, for example, a tape or a sheet, etc. for fixing the sensing optical fiber 33 stored in the sensor unit 32 to the monitoring object 40.

### <Arrangement pattern of the sensing optical fiber 33 in sensor unit 32>

Subsequently, the arrangement pattern of the sensing optical fiber 33 in the sensor unit 32 will be described.

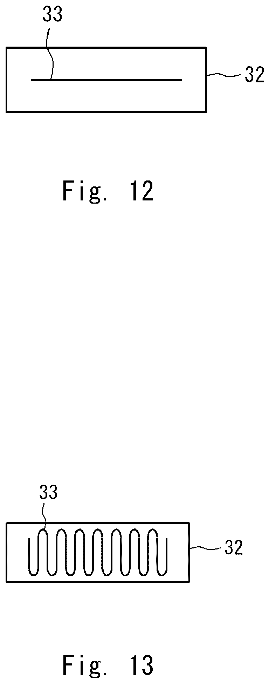

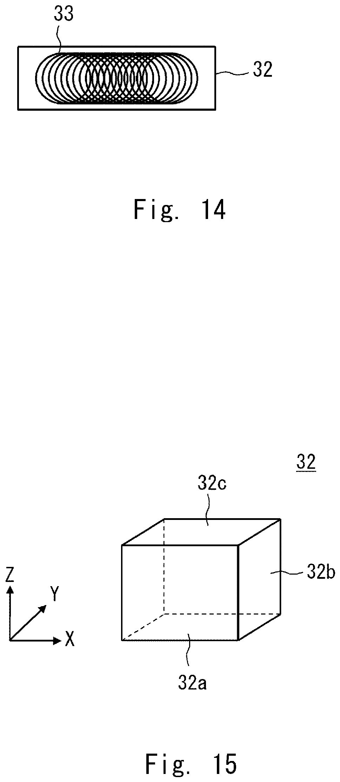

The arrangement pattern of the sensing optical fiber 33 in the sensor unit 32 may be various patterns. For example, the sensing optical fiber 33 may have a linear pattern as shown in Fig. 12, a pattern of a folded structure as shown in Fig. 13, or a pattern of a spiral structure as shown in Fig. 14. Of these, since the patterns of the folded structure and the spiral structure shown in Figs. 13 and 14 increase the density of the sensing optical fiber 33, it becomes possible to improve the detection sensitivity of the monitoring object 40.

Further, as shown in Fig. 15, the sensing optical fiber 33 may be three-dimensionally arranged in each of the three axial directions orthogonal to each other in the sensor unit 32. Specifically, for example, when the sensor unit 32 has a rectangular parallelepiped shape, the sensing optical fiber 33 having the pattern of any one of Figs. 12 to 14 may be arranged respectively on, for example, the front side surface 32a parallel to the XZ plane, the right side surface 32b parallel to the YZ plane, and the upper surface 32c parallel to the XY plane. This makes it possible to detect the vibration status of three different vibration axes of the monitoring object 40.

Further, for example, in a situation where the monitoring object 40 violently shakes, if the sensing optical fiber 33 is directly installed on the monitoring object 40, excessive vibration will be detected so that the vibration status cannot be detected with an appropriate intensity.

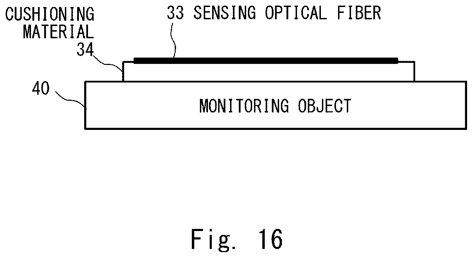

Therefore, as shown in Fig. 16, the sensing optical fiber 33 may be installed on the monitoring object 40 with a cushioning material 34 for lessening impact, such as a cushion, being interposed between the sensing optical fiber 33 and the monitoring object 40. This makes it possible to adjust the intensity of the vibration to be detected by the sensor unit 32, thereby adjusting the detection sensitivity.

### <Arrangement position of optical fiber sensing instrument 20>

Next, the arrangement position of the optical fiber sensing instrument 20 will be described.

The optical fiber sensing instrument 20 may be arranged inside a communication carrier station building or outside a communication carrier station building.

Further, when the optical fiber sensing instrument 20 is arranged outside a communication carrier station building, the optical fiber sensing instrument 20 may be arranged near the optical fiber sensing expansion apparatus 30. Moreover, a plurality of optical fiber sensing instruments 20 may be arranged. For example, one optical fiber sensing instrument 20 may be arranged for a predetermined number (for example, 10) of the optical fiber sensing expansion apparatuses 30. Further, in a region where a plurality of optical fiber sensing expansion apparatuses 30 are arranged, one optical fiber sensing instrument 20 may be arranged for a predetermined distance (for example, 10 m).

### <When the optical fiber 10 has a branch configuration>

Subsequently, in the optical fiber sensing system according to the present example embodiment, the configuration when the optical fiber 10 has a branch configuration will be described.

For example, in a subscriber-side optical communication network using an optical fiber 10 laid on a utility pole, a 1:N-type communication scheme is adopted between the communication carrier station building side and the subscriber side, as in PON (Passive Optical Network).

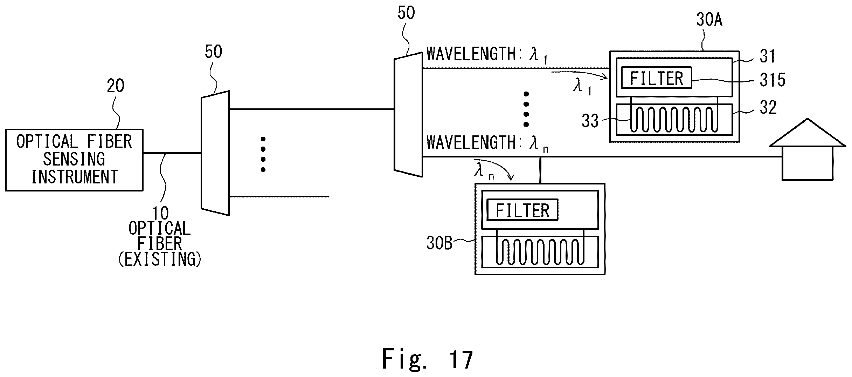

As shown in Fig. 17, when the 1:N-type communication scheme is adopted in the optical fiber sensing system according to the present example embodiment, one or more (two in Fig. 17) branch units 50 such as an optical coupler or a WSS (Wavelength Selectable Switch) are installed so that the optical fiber 10 is branched by the branch unit 50.

At this time, the optical fiber sensing expansion apparatus 30 may be arranged so as to terminate the line of the optical fiber 10 being unused after branching (the optical fiber sensing expansion apparatus 30A in Fig. 17). Alternatively, the optical fiber sensing expansion apparatus 30 may be arranged so as to be inserted to the middle of the line of the optical fiber 10 being in use after branching, as in Fig. 1 (the optical fiber sensing expansion apparatus 30B in Fig. 17).

Here, it is assumed that the same wavelength is used in each line of the optical fiber 10 after branching, and there are optical fiber sensing expansion apparatuses 30 which are located at the same distance from the optical fiber sensing instrument 20 in each of the two different lines. However, in this case, even if receiving scattered light from the two optical fiber sensing expansion apparatuses 30 respectively located on two different lines, the optical fiber sensing instrument 20 cannot distinguish these two optical fiber sensing expansion apparatuses 30.

Therefore, in an example not belonging to the invention, different wavelengths may be assigned to each line after branching such that the optical fiber sensing instrument 20 can discriminate different lines according to the wavelength of the optical signal. In the example of Fig. 17, a wavelength λ₁ is assigned to the line on which the optical fiber sensing expansion apparatus 30A is arranged. For that reason, the fiber connection unit 31 of the optical fiber sensing expansion apparatus 30A includes a filter 315 that passes an optical signal of wavelength λ₁, and is configured to transmit and receive only an optical signal of wavelength λ₁ to and from this line. Further, the wavelength λₙ is assigned to the line on which the optical fiber sensing expansion apparatus 30B is arranged. Therefore, the fiber connection unit 31 of the optical fiber sensing expansion apparatus 30B includes a filter 315 that passes an optical signal of wavelength λₙ, and is configured to transmit and receive only an optical signal of wavelength λₙ to and from this line.

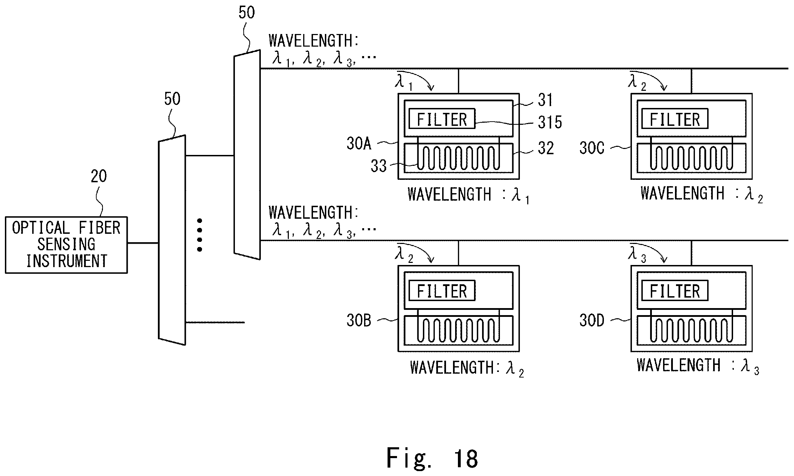

Further, as shown in Fig. 18, according to the invention, the wavelength is assigned not for each line but for each optical fiber sensing expansion apparatus 30. At this time, it is preferable that the optical fiber sensing expansion apparatuses 30 located on different lines but at the same distance from the optical fiber sensing instrument 20 are assigned wavelengths such that the wavelengths are different from each other. As a result, the optical fiber sensing instrument 20 can discriminate the optical fiber sensing expansion apparatuses 30 by the wavelength of the optical signal.

In Fig. 18, the optical fiber sensing expansion apparatuses 30A and 30B are located on different lines respectively, but at the same distance from the optical fiber sensing instrument 20. Therefore, a wavelength λ₁ is assigned to the optical fiber sensing expansion apparatus 30A, and a wavelength λ₂ is assigned to the optical fiber sensing expansion apparatus 30B. Moreover, the optical fiber sensing expansion apparatuses 30C and 30D are also located on different lines, but at the same distance from the optical fiber sensing instrument 20. Therefore, the wavelength λ₂ is assigned to the optical fiber sensing expansion apparatus 30C, and the wavelength λ₃ is assigned to the optical fiber sensing expansion apparatus 30D. Further, in the example of Fig. 18, the wavelength λ₂ is assigned to both the optical fiber sensing expansion apparatuses 30B and 30C. This is because the optical fiber sensing expansion apparatuses 30B and 30C are located at different distances from the optical fiber sensing instrument 20 so that the optical fiber sensing instrument 20 can discriminate them by the distance, and there is no need of discriminating the two by the wavelength of the optical signal.

Therefore, the fiber connection unit 31 of the optical fiber sensing expansion apparatus 30A includes a filter 315 that passes an optical signal of wavelength λ₁, and is configured to transmit and receive only an optical signal of wavelength λ₁. Similarly, the fiber connection unit 31 of the optical fiber sensing expansion apparatuses 30B and 30C includes a filter 315 that passes an optical signal of wavelength λ₂, and is configured to transmit and receive only an optical signal of wavelength λ₂, and the fiber connection unit 31 of the optical fiber sensing expansion apparatus 30D includes a filter 315 that passes an optical signal of wavelength λ₃, and is configured to transmit and receive only an optical signal of wavelength λ₃.

The wavelength assignment for each optical fiber sensing expansion apparatus 30 as shown in Fig. 18 is exemplary and is not limited thereto. The wavelength may be assigned in any way that allows the optical fiber sensing instrument 20 to discriminate each of the plurality of optical fiber sensing expansion apparatuses 30.

### <Operation of example embodiment>

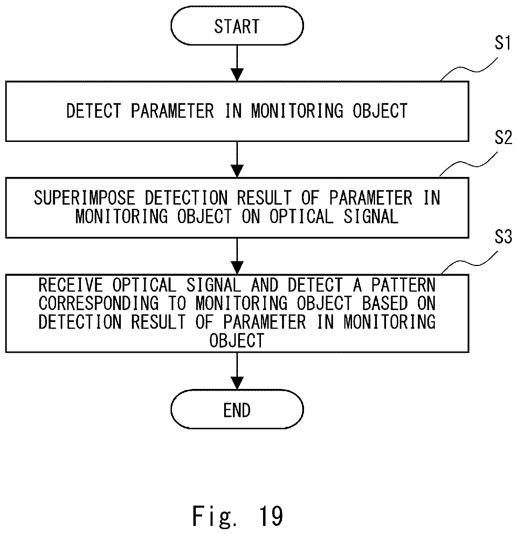

Hereinafter, the operation of an optical fiber sensing system according to the present example embodiment will be described. Here, the operation flow of the optical fiber sensing system according to the present example embodiment will be described with reference to Fig. 19. Note that Fig. 19 shows the operation after the sensor unit 32 of the optical fiber sensing expansion apparatus 30 is installed in the monitoring object 40, and the sensing optical fiber 33 stored in the sensor unit 32 is connected to the optical fiber 10 by the fiber connection unit 31.

As shown in Fig. 19, first, the sensor unit 32 detects various parameters such as vibration, sound, temperature, and stress generated in the monitoring object 40 by using the sensing optical fiber 33 (step S1).

Subsequently, the fiber connection unit 31 superimposes the detection result of the parameter in the monitoring object 40, which is detected by the sensor unit 32, on the optical signal transmitted by the optical fiber 10 (step S2).

After that, the optical fiber sensing instrument 20 receives an optical signal on which the detection result of the parameter in the monitoring object 40 is superimposed, and based on the detection result of the parameter in the monitoring object 40, detects a pattern corresponding to the monitoring object 40 (step S3). This pattern becomes a dynamic unique pattern corresponding to the state, structure, material, etc. of the monitoring object 40.

### <Effects of example embodiments>

As described above, according to the present example embodiment, the optical fiber sensing expansion apparatus 30 includes a fiber connection unit 31 which can connect the sensor unit 32 in which the sensing optical fiber 33 is stored and the sensing optical fiber 33 to the optical fiber 10, and which superimposes the detection result detected in the sensor unit 32 on an optical signal transmitted through the optical fiber 10, and a fixing unit or the like which fixes the sensor unit 32 to the monitoring object 40.

Therefore, it becomes possible to perform expansion such as addition of a monitoring object 40 and improvement of detection sensitivity only by fixing the sensor unit 32 to a monitoring object 40 to be added, a monitoring object 40 whose detection sensitivity is desired to be improved, and the like, and connecting the sensing optical fiber 33 to the existing optical fiber 10 by the fiber connection unit 31. Therefore, it is possible to expand the optical fiber sensing system inexpensively and easily by effectively utilizing the existing optical fiber 10.

Further, according to the present example embodiment, an optical fiber sensing technology which uses an optical fiber as a sensor is utilized. Therefore, it is possible to obtain advantages such as insensitivity to electromagnetic noise, non-necessity to supply power to the sensor, excellence in environmental resistance, facilitated maintenance, and the like.

### <Other embodiments>

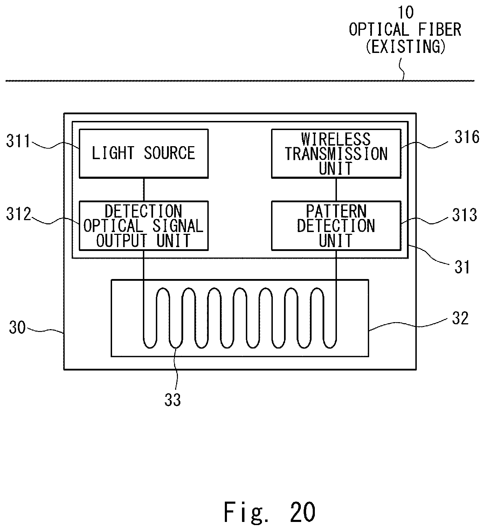

In the example of Fig. 11, the fiber connection unit 31 detects a dynamic unique pattern corresponding to the state, structure, material, etc. of the monitoring object 40, and provides the optical fiber 10 with a disturbance corresponding to the unique pattern of the monitoring object 40; however, it may transmit the unique pattern of the monitoring object 40 directly to the optical fiber sensing instrument 20. Hereinafter, the configuration of the fiber connection unit 31 in this case will be described with reference to Fig. 20.

The fiber connection unit 31 shown in Fig. 20 is different in comparison with the configuration shown in Fig. 11 in that the disturbance generation unit 314 is replaced with the wireless transmission unit 316.

The wireless transmission unit 316 wirelessly transmits a unique pattern of the monitoring object 40 detected by the pattern detection unit 313 to the optical fiber sensing instrument 20. Therefore, the monitoring section of the optical fiber sensing instrument 20 is shortened, and the number of monitoring objects 40 to be monitored is reduced. As a result of the monitoring section of the optical fiber sensing instrument 20 being shortened, the transmission distance of the pulsed light and the scattered light is shortened so that the fiber loss is reduced. As a result, the S/N ratio (signal-to-noise ratio) of the received scattered light can be improved, thereby improving the monitoring accuracy. Further, as a result of the number of monitoring objects 40 to be monitored by the optical fiber sensing instrument 20 being reduced, the monitoring cycle can be improved.

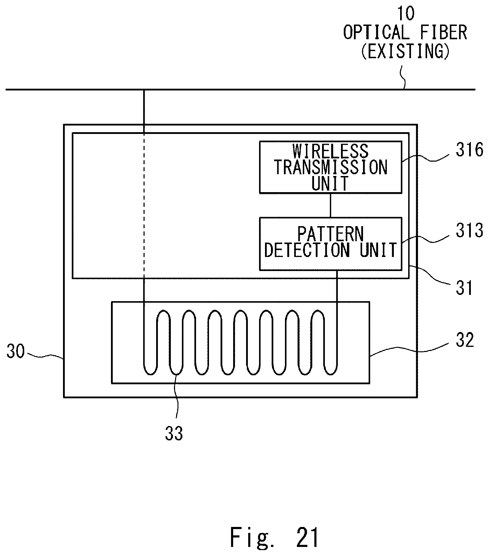

In the example of Fig. 20, the detection optical signal output unit 312 makes the detection optical signal generated from the output of the light source 311 incident into the sensing optical fiber 33, but this is not limiting. For example, as shown in Fig. 21, the sensing optical fiber 33 may be optically connected to the optical fiber 10, and the detection optical signal received from the optical fiber sensing instrument 20 may be made incident into the sensing optical fiber 33.

Further, in the examples of Figs. 20 and 21, the unique pattern of the monitoring object 40 is transmitted wirelessly, but the transmission of the unique pattern is not limited to wireless transmission. For example, a wired transmission unit may be provided instead of the wireless transmission unit 316, and the wired transmission unit may transmit a unique pattern by wire via a LAN (Local Area Network) cable or the like.

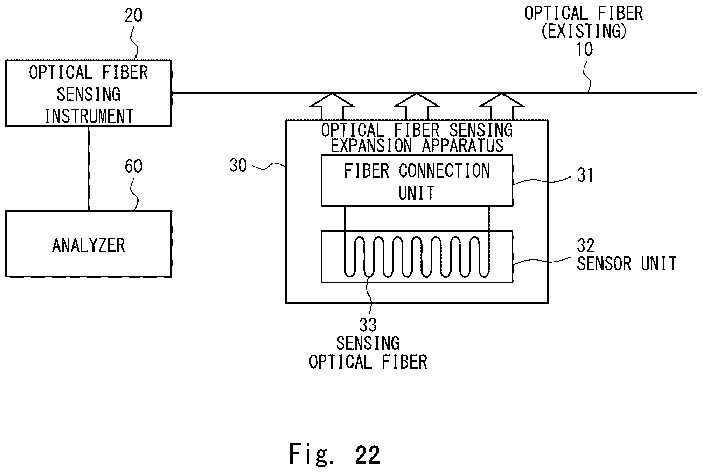

Further, as shown in Fig. 22, the optical fiber sensing system may include an analyzer 60 that analyzes the state, structure, material, etc. of the monitoring object 40 based on the unique pattern of the monitoring object 40 corresponding to the state, structure, material, etc. of the monitoring object 40 detected by the optical fiber sensing instrument 20. For example, the analyzer 60 can detect the state, structure, material, etc. of the monitoring object 40 with high accuracy by performing pattern analysis of a unique pattern that dynamically represents a change in vibration (for example, transition of change in vibration intensity) corresponding to the state, structure, material, etc. of the monitoring object 40. The analyzer 60 may be arranged inside a communication carrier station building together with the optical fiber sensing instrument 20, or may be arranged outside a communication carrier station building.

For example, the present disclosure can also be realized by a processor such as a CPU (Central Processing Unit) performing any processing of the optical fiber sensing expansion apparatus by reading out and executing a computer program stored in a memory such as a RAM (Random Access Memory) or a ROM (Read Only Memory).

The programs described above can be stored and supplied to a computer using various types of non-transitory computer readable media. Non-transitory computer-readable media include various types of tangible storage media. Examples of non-transitory computer-readable media include magnetic recording media (e.g., flexible disks, magnetic tapes, hard disk drives), magneto-optical recording media (e.g., magneto-optical disks), CD-ROMs (Compact Disc-Read Only Memory), CD-Rs (CD-Recordable), CD-R/Ws (CD-ReWritable), and semiconductor memories (e.g., mask ROM, PROM (Programmable ROM), EPROM (Erasable PROM), flash ROM, RAM (Random Access Memory)). The programs described above may also be supplied to the computer by various types of transitory computer readable media. Examples of transitory computer-readable media include electrical signals, optical signals, and electromagnetic waves. The transitory computer-readable medium can supply the program to the computer via a wired communication path such as an electric wire and an optical fiber, or a wireless communication path.

### Reference Signs List

10 Optical fiber (existing)
20, 20A Optical fiber sensing instrument
30, 30A, 30B, 30C, 30D Optical fiber sensing expansion apparatus
31 Fiber connection unit
311 Light source
312 Detection optical signal output unit
313 Pattern detection unit
314 Disturbance generation unit
315 Filter
316 Wireless transmission unit
32 Sensor unit
33 Sensing optical fiber
34 Cushioning material
40 Monitoring object
50 Branch unit
60 Analyzer
P1, P2 Monitoring point
CN Connector

## Claims

1. An optical fiber sensing expansion apparatus (30), comprising:
a sensing optical fiber;
a sensor unit (32) configured to store the sensing optical fiber (33);
a fixing unit configured to fix the sensor unit (32) to a monitoring object; and
a fiber connection unit (31) configured to be capable of connecting the sensing optical fiber (33) to an optical fiber (10), wherein
the fiber connection unit (31) is configured to superimpose a detection result of the sensor unit (32) on an optical signal transmitted by the optical fiber (10), wherein
a wavelength is assigned to the optical fiber sensing expansion apparatus (30), and
the fiber connection unit (31) comprises a filter (315) that is adapted to pass an optical signal of the wavelength assigned to the optical fiber sensing expansion apparatus (30), and is configured to transmit and receive the optical signal of the wavelength to and from the optical fiber (10) to which the sensing optical fiber (33) is connected.

2. The optical fiber sensing expansion apparatus (30) according to Claim 1, wherein the optical fiber (10) is an existing optical fiber.

3. The optical fiber sensing expansion apparatus (30) according to Claim 1 or 2, wherein the fiber connection unit (31) is configured to detect a pattern corresponding to the monitoring object based on the detection result of the sensor unit (32), and superimpose the detected pattern on the optical signal.

4. The optical fiber sensing expansion apparatus (30) according to Claim 3, wherein the fiber connection unit (31) is configured to provide the optical fiber (10) with at least one of vibration, sound or heat corresponding to the detected pattern.

5. The optical fiber sensing expansion apparatus (30) according to any one of Claims 1 to 4 further comprising a housing configured to include the sensor unit, wherein
the fixing unit is configured to fix the housing to the monitoring object.

6. The optical fiber sensing expansion apparatus (30) according to any one of Claims 1 to 5, wherein the sensing optical fiber (33) is arranged in each of three axial directions which are orthogonal with one another in the sensor unit (32).

7. The optical fiber sensing expansion apparatus (30) according to any one of Claims 1 to 6, wherein the fixing unit is configured to fix the sensor unit (32) to the monitoring object with a cushioning material being interposed between the sensing optical fiber (33) and the monitoring object.

8. The optical fiber sensing expansion apparatus (30) according to Claim 1, wherein
a wavelength is assigned to the optical fiber sensing expansion apparatus (30), and
the fiber connection unit (31) comprises a filter (315) that passes an optical signal of the wavelength assigned to the optical fiber sensing expansion apparatus (30), and is configured to transmit and receive the optical signal of the wavelength to and from the line of the optical fiber (10) to which the sensing optical fiber (33) is connected.

9. An optical fiber sensing system, comprising:
the optical fiber sensing expansion apparatus (30) according to any one of claims 1 to 8;
the optical fiber (10); and
a detection unit (313), wherein
the detection unit (313) is configured to detect a pattern corresponding to the monitoring object based on the detection result of the sensor unit (32) which is superimposed on the optical signal.

## Patentansprüche

1. Glasfasererfassungs-Erweiterungsvorrichtung (30), die aufweist:
eine Erfassungsglasfaser;
eine Sensoreinheit (32), die konfiguriert ist, die Erfassungsglasfaser (33) aufzunehmen;
eine Befestigungseinheit, die konfiguriert ist, die Sensoreinheit (32) an einem Überwachungsobjekt zu befestigen; und
eine Faserverbindungseinheit (31), die so konfiguriert ist, dass sie imstande ist, die Erfassungsglasfaser (33) mit einer Glasfaser (10) zu verbinden, wobei
die Faserverbindungseinheit (31) konfiguriert ist, ein Erfassungsergebnis der Sensoreinheit (32) einem optischen Signal zu überlagern, das von der Glasfaser (10) gesendet wird, wobei
der Glasfasererfassungs-Erweiterungsvorrichtung (30) eine Wellenlänge zugewiesen ist, und
die Faserverbindungseinheit (31) einen Filter (315) aufweist, der eingerichtet ist, ein optisches Signal der Wellenlänge durchzulassen, die der Glasfasererfassungs-Erweiterungsvorrichtung (30) zugewiesen ist, und konfiguriert ist, das optische Signal der Wellenlänge zu und von der Glasfaser (10) zu senden und zu empfangen, mit der die Erfassungsglasfaser (33) verbunden ist.

2. Glasfasererfassungs-Erweiterungsvorrichtung (30) nach Anspruch 1, wobei die Glasfaser (10) eine vorhandene Glasfaser ist.

3. Glasfasererfassungs-Erweiterungsvorrichtung (30) nach Anspruch 1 oder 2, wobei die Faserverbindungseinheit (31) konfiguriert ist, ein dem Überwachungsobjekt entsprechendes Muster basierend auf dem Erfassungsergebnis der Sensoreinheit (32) zu erkennen und das erkannte Muster dem optischen Signal zu überlagern.

4. Glasfasererfassungs-Erweiterungsvorrichtung (30) nach Anspruch 3, wobei die Faserverbindungseinheit (31) konfiguriert ist, die Glasfaser (10) mit einer Vibration und/oder Schall und/oder Wärme gemäß dem erkannten Muster zu versorgen.

5. Glasfasererfassungs-Erweiterungsvorrichtung (30) nach einem der Ansprüche 1 bis 4, die ferner ein Gehäuse aufweist, das konfiguriert ist, die Sensoreinheit zu enthalten, wobei die Befestigungseinheit konfiguriert ist, das Gehäuse am Überwachungsobjekt zu befestigen.

6. Glasfasererfassungs-Erweiterungsvorrichtung (30) nach einem der Ansprüche 1 bis 5, wobei die Erfassungsglasfaser (33) in jeder der drei axialen Richtungen, die zueinander orthogonal sind, in der Sensoreinheit (32) angeordnet ist.

7. Glasfasererfassungs-Erweiterungsvorrichtung (30) nach einem der Ansprüche 1 bis 6, wobei die Befestigungseinheit konfiguriert ist, die Sensoreinheit (32) am Überwachungsobjekt zu befestigen, wobei ein Polstermaterial zwischen der Erfassungsglasfaser (33) und dem Überwachungsobjekt angeordnet ist.

8. Glasfasererfassungs-Erweiterungsvorrichtung (30) nach Anspruch 1, wobei
der Glasfasererfassungs-Erweiterungsvorrichtung (30) eine Wellenlänge zugewiesen ist, und
die Faserverbindungseinheit (31) einen Filter (315) aufweist, der ein optisches Signal der Wellenlänge durchlässt, die der Glasfasererfassungs-Erweiterungsvorrichtung (30) zugewiesen ist, und konfiguriert ist, das optische Signal der Wellenlänge zu und von der Leitung der Glasfaser (10) zu senden und zu empfangen, mit der die Erfassungsglasfaser (33) verbunden ist.

9. Glasfasererfassungssystem, das aufweist:
die Glasfasererfassungs-Erweiterungsvorrichtung (30) nach einem der Ansprüche 1 bis 8;
die Glasfaser (10); und
eine Erfassungseinheit (313), wobei
die Erfassungseinheit (313) konfiguriert ist, ein dem Überwachungsobjekt entsprechendes Muster basierend auf dem Erfassungsergebnis der Sensoreinheit (32) zu erfassen, das dem optischen Signal überlagert ist.

## Revendications

1. Dispositif de détection à fibre optique expansible (30), comprenant :
une fibre optique de détection ;
une unité de capteur (32) prévue pour stocker la fibre optique de détection (33) ;
une unité de fixation prévue pour fixer l'unité de capteur (32) à un objet à surveiller ; et
une unité de connexion de fibre (31) prévue pour pouvoir connecter la fibre optique de détection (33) à une fibre optique (10), où
l'unité de connexion de fibre (31) est prévue pour superposer un résultat de détection de l'unité de capteur (32) à un signal optique transmis par la fibre optique (10), où
une longueur d'onde est attribuée au dispositif de détection à fibre optique expansible (30), et
l'unité de connexion de fibre (31) comprend un filtre (315) apte à laisser passer un signal optique de la longueur d'onde attribuée au dispositif de détection à fibre optique expansible (30), et est prévue pour transmettre le signal optique de la longueur d'onde à la fibre optique (10) à laquelle la fibre optique de détection (33) est connectée, et à le recevoir de celle-ci.

2. Dispositif de détection à fibre optique expansible (30) selon la revendication 1, où la fibre optique (10) est une fibre optique existante.

3. Dispositif de détection à fibre optique expansible (30) selon la revendication 1 ou la revendication 2, où l'unité de connexion de fibre (31) est prévue pour détecter un motif correspondant à l'objet à surveiller sur la base du résultat de détection de l'unité de capteur (32), et superposer le motif détecté au signal optique.

4. Dispositif de détection à fibre optique expansible (30) selon la revendication 3, où l'unité de connexion de fibre (31) est prévue pour associer à la fibre optique (10) une vibration et/ou un son et/ou une température correspondant au motif détecté.

5. Dispositif de détection à fibre optique expansible (30) selon l'une des revendications 1 à 4, comprenant en outre un boîtier prévu pour contenir l'unité de capteur,
l'unité de fixation étant prévue pour fixer le boîtier à l'objet à surveiller.

6. Dispositif de détection à fibre optique expansible (30) selon l'une des revendications 1 à 5, où la fibre optique de détection (33) est agencée dans chacune de trois directions axiales orthogonales l'une à l'autre dans l'unité de capteur (32).

7. Dispositif de détection à fibre optique expansible (30) selon l'une des revendications 1 à 6, où l'unité de fixation est prévue pour fixer l'unité de capteur (32) à l'objet à surveiller avec un matériau amortisseur intercalé entre la fibre optique de détection (33) et l'objet à surveiller.

8. Dispositif de détection à fibre optique expansible (30) selon la revendication 1, où
une longueur d'onde est attribuée au dispositif de détection à fibre optique expansible (30), et
l'unité de connexion de fibre (31) comprend un filtre (315) laissant passer un signal optique de la longueur d'onde attribuée au dispositif de détection à fibre optique expansible (30), et est prévue pour transmettre le signal optique de la longueur d'onde à la ligne de la fibre optique (10) à laquelle la fibre optique de détection (33) est connectée, et à le recevoir de celle-ci.

9. Système de détection à fibre optique, comprenant :
le dispositif de détection à fibre optique expansible (30) selon l'une des revendications 1 à 8 ;
la fibre optique (10) ; et
une unité de détection (313), où
l'unité de détection (313) est prévue pour détecter un motif correspondant à l'objet à surveiller sur la base du résultat de détection de l'unité de capteur (32) superposé au signal optique.
